**Europäisches Patentamt**

(19) **European Patent Office**

**Office européen des brevets**

(11) Veröffentlichungsnummer: **0 020 802**
**B1**

(12) **EUROPÄISCHE PATENTSCHRIFT**

(45) Veröffentlichungstag der Patentschrift:
27.07.83

(51) Int. Cl.³: **A 01 C 3/02,** B 65 D 88/16,
C 02 F 3/02

(21) Anmeldenummer: **79101989.6**

(22) Anmeldetag: **18.06.79**

(54) Behälter zur Lagerung von Flüssigkeiten, insbesondere von Flüssigmist.

(43) Veröffentlichungstag der Anmeldung:
**07.01.81 Patentblatt 81/1**

(73) Patentinhaber: **Feilhauer, Ingrid,
D-8531 Schauerheim 60 (DE)**

(45) Bekanntmachung des Hinweises auf die Patenterteilung:
**27.07.83 Patentblatt 83/30**

(72) Erfinder: **Feilhauer, Walter, D-8531 Schauerheim 60 (DE)**

(84) Benannte Vertragsstaaten:
**AT BE CH FR GB IT NL SE**

(74) Vertreter: **Brose, Manfred, Dr., Pellergasse 45,
D-8500 Nürnberg 50 (DE)**

(56) Entgegenhaltungen:
**AT-B-247 656
DE-A-2 364 933
DE-A-2 434 935
DE-A-2 718 418
DE-B-2 231 865
DE-B-2 248 685
DE-C-374 450
GB-A-826 301
US-A-2 404 418
US-A-2 724 418
US-A-3 260 371
US-A-3 504 827**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Behälter zur Lagerung von Flüssigkeiten, insbesondere von Flüssigmist

Die Erfindung betrifft einen Behälter zur Lagerung von Flüssigkeiten, insbesondere von Flüssigmist entsprechend dem ersten Teil des Anspruches 1.

Von Festmist ist die Neigung bekannt, infolge des Luftzutritts sich selbst zu erhitzen. Bei Flüssigmist besteht jedoch keine Neigung zur Selbsterhitzung, da normalerweise Luft in Flüssigmist nicht in ausreichendem Maße vorhanden ist. Durch die Selbsterhitzung von Festmist werden bei bestimmten erreichbaren Temperaturen von etwa 45°C = 318°K und entsprechenden Lagerzeiten Krankheitserreger bis hin zu Salmonellen inaktiviert und abgetötet. Diese Vorgänge sind bekannt. Beim Flüssigmist ist jedoch eine entseuchende Behandlung, so wie diese vorstehend beschrieben beim Festmist von selbst eintritt, konventionell nicht möglich. Es wurden zwar Belüftungsverfahren, vorwiegend mit Oberflächenbelüftern, eingeführt, diese haben jedoch den schwerwiegenden Nachteil, einen großen mechanischen und daher auch kostenmäßigen Aufwand darzustellen. Bei solchen Geräten ist mit einer gewissen Reduktion der Erreger zu rechnen, doch ist dies für eine Entseuchung nicht ausreichend. Man ist deshalb gezwungen, durch feinst und innig eingemischte Luft in den Flüssigmist dessen Selbsterwärmung anzuregen.

Ferner ist bekannt, daß Schweinegülle bei längerer Lagerung einen verhältnismäßig dichten und festen Bodensatz bildet. Rindergülle bildet hingegen eine Schwimmdecke, die sich aus den Feststoffanteilen zusammensetzt und ebenfalls sehr fest sein kann. Da jedoch immer der Wunsch besteht, den gelagerten Flüssigmist möglichst rückstandslos aus dem Lagerbehälter wieder zu entfernen, muß dieser homogenisiert werden, um bei Schweinegülle die Bildung des Bodensatzes und bei Rindergülle die Bildung der Schwimmdecke zu verhindern.

Die Belüftung und die Homogenisierung des Flüssigmistes werden in der Mehrzahl der Fälle zu einem Vorgang zusammengefaßt.

Es sind verschiedene Ausführungen von Lagerbehältern für Flüssigmist bekannt, die hauptsächlich in stabiler gemauerter oder betongegossener Rundform ausgeführt sind. Derartigen Bauwerken haftet ganz allgemein der Mangel an, daß sie technisch aufwendig und dementsprechend kapitalintensiv sind, sie demjenigen allgemeinen Verschleiß unterliegen, der von Bauwerken dieser Art bekannt ist und daß sie, was manchmal auch ein Nachteil sein kann, stationär sind. Ferner sind Lagerbehälter aus Holz, Kunststoff oder Metall bekannt, die entweder im Erdbereich gelagert oder als Holzbehälter ausgeführt sind. Schließlich werden auch noch emaillierte Stahlbehälter verwendet.

Im Boden befindliche Betonbehälter haben meist eine befahrbare Decke, während Holzbehälter und mit Kunststoffolien ausgekleidete Erdgruben oben offen sind. Offene Behälter führen jedoch sehr oft zu unangenehmen Geruchsbelästigungen besonders bei der nachfolgend besprochenen Belüftung, die auch zu beachtlicher Schaumbildung führen kann. Denn die Belüftung ist auch notwendig, um bei längerer Lagerung des Flüssigmistes die Geruchsbelästigung der Umwelt abzubauen. Die vorstehend beschriebenen Behälter stellen nun je nach Bauart und verwendetem Werkstoff deshalb eine mehr oder minder große Quelle ständiger Betriebskosten dar, da bei ihnen nur mit einem großen zusätzlichen Aufwand an mechanischer bzw. elektrischer Energie eine Homogenisierung und Belüftung möglich ist.

Aus der AT-A-247 656 ist ein Behälter zur Lagerung von Flüssigkeiten bekannt, bei dem eine Einrichtung zur Homogenisierung von in dem Behälter zu lagernden Flüssigkeiten mit sich entmischenden Feststoffanteilen vorgesehen ist. Diese Einrichtung besteht aus einer Luftleitung, die in ihrem über den Bodenbereich sich erstreckenden Teil mindestens eine zum Faßboden gerichtete Düse aufweist. Durch diese Ausführung kann die Druckluft nur nach unten entweichen und der am Boden liegende Schlamm wird aufgewirbelt. Dieser Einrichtung haften jedoch die Nachteile an, daß für das Einpressen der Luft in die Flüssigkeit beträchtliche Energie für den Kompressor aufzuwenden ist. Ferner ist für eine ausreichende Aufwirbelung des abgesetzten Schlamms eine längere und häufigere Betriebsdauer notwendig. Hat die abgesetzte Schlammschicht eine höhere Festigkeit, so ist ein Aufwirbeln nicht mehr möglich.

In der DE-A-2 434 935 ist ein Verfahren und eine Vorrichtung zum Belüften einer Flüssigkeit beschrieben, die darin besteht, daß die Flüssigkeit unter hohem Druck durch eine Düse gepreßt wird, die nach dem Prinzip einer Flüssigkeitsstrahlpumpe Luft ansaugt und mitreist. Bei diesem Verfahren werden sehr große Energiemengen in Form von elektrischem Strom für den Betrieb der Zerkleinerungspumpe benötigt, so daß dieses Verfahren nur für stationären Betrieb geeignet ist. Außerdem haftet diesem Verfahren der weitere Nachteil an, daß die Belüftung der Flüssigkeit zwangsweise mit der Zerkleinerung fester Anteile gekoppelt ist, was eventuell gar nicht notwendig ist und damit zu einem weiteren unnötigen Energieverbrauch führt.

Der Erfindung liegt nun die Aufgabe zugrunde, einen Behälter zur Lagerung von Flüssigmist mit einer integrierten Homogenisierungseinrichtung und aeroben Behandlung durch Belüftung zu schaffen, der sowohl in den Anschaffungs- als auch in den laufenden Betriebskosten wesentlich günstiger ist, als die bekannten Behälter mit den bekannten Einrichtungen für Homogenisierung und Belüftung.

Diese Aufgabe wird nach der Erfindung dadurch gelöst, daß der Behälter die Form eines flachen Kissens hat und dessen Wandmaterial aus einem mit Kunststoff oder Gummi beschichteten Gewebe besteht und daß bei rechteckiger oder quadratischer Grundfläche diese mit mindestens einer langgestreckten aufblähbaren Kammer (Längskammer) und bei runder Grundfläche diese mit mindestens einer sektoralen aufblähbaren Kammer in Form eines Kreislausschnittes versehen ist. Ein derartiger Behälter ist gegenüber allen bisher bekannt gewordenen Verfahren und Vorrichtungen zur Lagerung von Flüssigkeiten, vorzugsweise Flüssigmist, mit einer Homogenisierungseinrichtung und aeroben Behandlung sehr viel kostengünstiger. Er ist darüberhinaus mobil und benötigt zu seiner Aufstellung lediglich ein Sandbett. Die Längskammer kann durch Vollpumpen mit Flüssigmist zur Ausdehnung gebracht werden, wodurch es möglich ist, einen auf ihr liegenden Bodensatz oder eine unter ihr liegende Schwimmdecke aus ihrer Lage zu bringen, mechanisch zu beanspruchen und damit zu zerstören.

In weiterer Fortbildung der Erfindung besitzt jede Längskammer ein Zulaufrohr und eine Austrittsöffnung mit kleinerem Querschnitt als das Zulaufrohr. Das Zulaufrohr ist über eine Pumpe und einen Mehrweghahn mit mindestens einem in den Hauptteil des Behälters mündenden Rohr verbunden. Mit der Pumpe ist es möglich, Flüssigmist in die Längskammer zu pumpen, wodurch sich diese ausdehnt und den Bodensatz bzw. die Schwimmdecke zerstört und die weitere Fernverteilung der Feststoffe durch Umpumpen erfolgt.

In den Zeichnungen sind Ausführungsbeispiele der Erfindung wiedergegeben. Es zeigt

Fig. 1 einen Schnitt durch den Behälter nach der Linie I-I von Fig. 2,

Fig. 2 eine im unteren Teil als Schnitt nach der Linie II-II von Fig. 1 und im oberen Teil als Draufsicht wiedergegebene Ansicht des Behälters,

Fig. 3 einen Schnitt durch den Behälter nach der Linie III-III von Fig. 2 mit unten liegenden Längskammern zur Lagerung von Schweinegülle,

Fig. 4 einen teilweisen Schnitt durch einen oben offenen Behälter mit unten liegenden Längskammern zur Lagerung von Schweinegülle,

Fig. 5 einen teilweisen Schnitt durch einen oben offenen Behälter mit oben liegenden Längskammern zur Lagerung von Rindergülle und

Fig. 6 einen teilweisen Schnitt durch den Behälter mit oben liegenden Längskammern zur Aufnahme von Rindergülle.

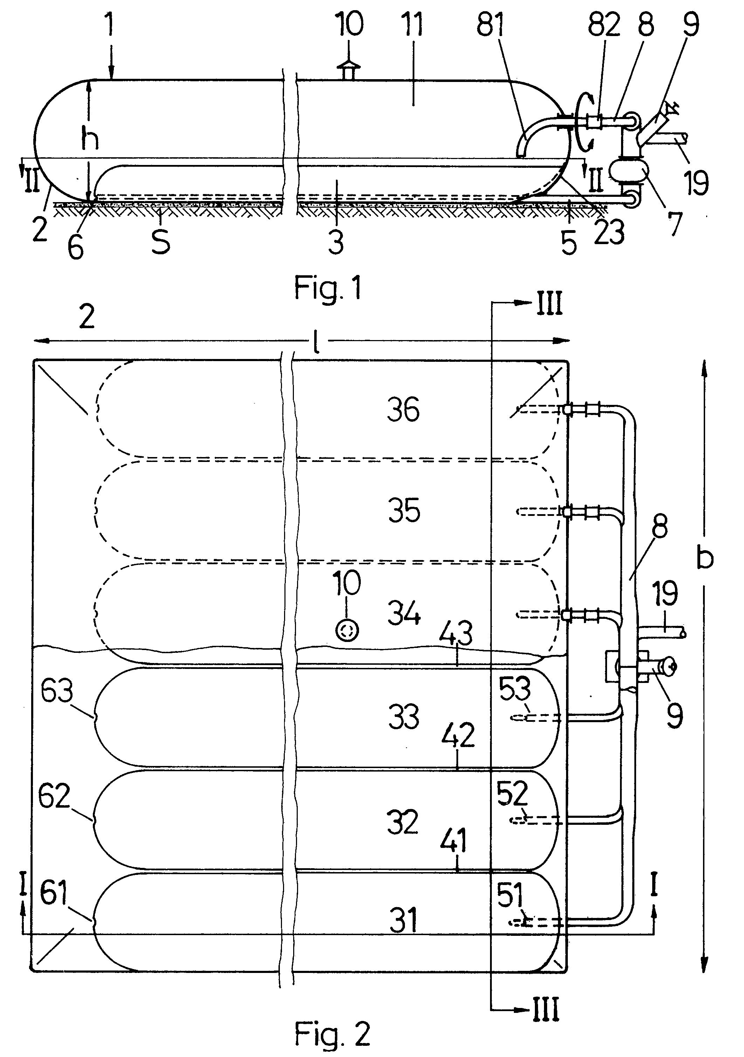

Die Erfindung betrifft einen Behälter 1 zur Lagerung von Flüssigmist mit einer Einrichtung zur Homogenisierung und aeroben Behandlung durch Belüftung des Flüssigmistes. In Fig. 1 ist ein Schnitt durch den erfindungsgemäßen Behälter 1 nach der Linie I-I von Fig. 2 wiedergegeben, während Fig. 2 einen Schnitt durch den Behälter 1 nach der Linie II-II von Fig. 1 zeigt. Wie beide Darstellungen erkennen lassen, hat der Behälter 1 die Form eines flachen Kissens. Das Wandmaterial des Behälters 1 besteht aus einem mit Kunststoff oder Gummi beschichteten Gewebe, vorzugsweise unter dem Warenzeichen »Trevira« (»Trevira« ist ein Warenzeichen der Hoechst AG) vertrieben werden. Aus den Fig. 1 und 2 ist ersichtlich, daß der Behälter 1 eine rechteckige oder quadratische Grundfläche 2 besitzt. Die Grundfläche 2 kann jedoch auch rund sein. Die Behälterhöhe h beträgt vorzugsweise etwa 1/50 der Behälterseitenlänge l. Aus besonderen Gründen können diese Maßverhältnisse jedoch auch geändert werden, ohne daß die nachfolgend beschriebene Funktionstüchtigkeit des Behälters 1 hierunter leidet. Der Behälter 1 ist ein vollkommen geschlossenes Kissen, wobei sich an geeigneten Stellen verschließbare, in den Zeichnungen jedoch nicht dargestellte Kontrollöffnungen befinden. Der Behälter 1 ist mobil, denn er beansprucht nur eine gerade Fläche, die als Sandbett S (Fig. 1) herzurichten ist.

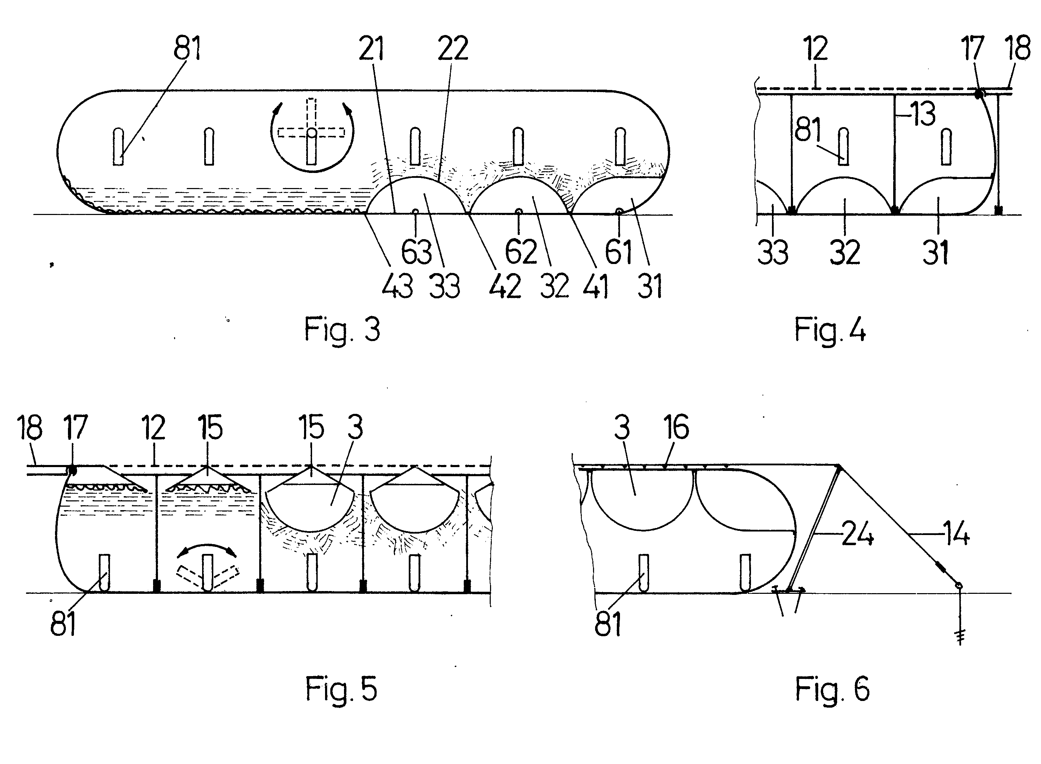

Die Grundfläche 2 des Behälters 1 ist mit mindestens einer langgestreckten Kammer (Längskammer) 3 versehen. Fig. 2 läßt erkennen, daß der in dieser Figur beispielsweise wiedergegebene Behälter 1 sechs Längskammern 31 bis 36 aufweist. Die Längskammern 31 bis 36 sind in einer in Fig. 3 wiedergegebenen Ausführungsform in der Weise hergestellt, daß die Grundfläche 2 des Behälters 1 unter Bildung der sechs Längskammern 31 bis 36 zweischalig ausgebildet ist, wobei die innere Schale 22 in Querrichtung b des Behälters 1 gesehen, länger als die äußere Schale 21 ist. Die längere innere Schale 22 ist mit der äußeren Schale 21 einmal durch im gleichen Abstand und parallel zueinander verlaufende Querverbindungen 41 bis 43, auf der einen Längsseite des Behälters 1 mit der Seitenwand 23 und auf der anderen Längsseite des Behälters 1 wiederum mit der äußeren Schale 21 der Grundfläche 2 verbunden. Bei runder Grundfläche 2 sind die Kammern 3 sectoral in Form von Kreisausschnitten ausgebildet.

Jede Längskammer 3 besitzt ein Zulaufrohr und eine Austrittsöffnung 6, wobei das Zulaufrohr 5 über eine Pumpe 7 und einen Mehrweghahn mit mindestens einem, in den Hauptteil 11 des Behälters mündenden Rohr 8 verbunden ist. Fig. 2 zeigt drei Zulaufrohre 51, 52, 53. Das Rohr 8 dient zur Befüllung des Lagerbehälters 1 mit Flüssigmist, außerdem als Ansaugrohr zum Umpumpen des Flüssigmistes aus dem Hauptteil 11 des Behälters 1 in die Längskammern 31 bis 36, aber auch zum Entleeren des Flüssigmistes aus dem Behälter 1 heraus in einen Tankwagen zum Ausfahren des Flüssigmistes auf das Feld.

Die Belüftung des Flüssigmistes erfolgt in der Weise, daß die Pumpe 7 über einen Injektor 9 eine einstellbare Menge Außenluft ansaugt und in den Behälter 1 mit hineinpumpt. Der Hauptteil 11 des Behälters 1 weist eine Entlüftungsöffnung 10 auf, aus der die überschüssigen Gase entweichen können.

An dem in den Hauptteil 11 des Behälters 1 mündenden Rohr 8 ist im Behälter 1 ein schwenkbarer und etwa in einem rechten Winkel abgewinkelter Bogen 81 angeordnet. Der Bogen 81 kann durch einen Handgriff 82 oder durch einen Antrieb um eine volle Umdrehung verschwenkt werden. Hierdurch ist es möglich, unterschiedliche Strömungsverhältnisse im Hauptteil 11 des Behälters 1 zu erzeugen. Über ein Anschlußrohr 19 kann der Flüssigmist in den Behälter 1 hineingepumpt werden und aus ihm wieder herausgepumpt werden. Die Querschnittsumme sowohl der Zulaufrohre 5 als auch der Rohre 8 ist gleich dem Ansaugquerschnitt der Pumpe 7. Mit der Pumpe 7 wird aber auch wie weiter unten noch im einzelnen beschrieben wird, der Flüssigmist homogenisiert.

Als Pumpe 7 wird vorzugsweise eine Drehkolbenpumpe mit Drehkolben aus Gummi verwendet. Durch die Wirkunsweise der Drehkolbenpumpe gegeben, erfolgt in ihr eine Feinstverteilung und innige Vermischung der eingetragenen Luft mit dem Flüssigmist. Arbeitet die Drehkolbenpumpe im Dauerbetrieb, so erfolgt eine dauernde Belüftung des Flüssigmistes und damit eine Selbsterwärmung auf ca. 45° C = 318° K. Die Drehrichtung kann bei dieser Pumpe beliebig gewählt werden, so daß durch einen Wechselschalter jederzeit die Saug- und Druckseite gewechselt werden kann.

In Fig. 4 wird ein teilweiser Schnitt durch einen oben offenen Behälter 1 mit unten liegenden Längskammern 3 wiedergegeben. Diese Behälterausführung wird benötigt, wenn unter einem Spaltenboden 12, auf dem sich die Tiere bewegen und leben, der auf einer großen Fläche herabfallende Flüssigmist aufgefangen werden soll. Um den Behälter 1 in seiner Form zu halten, wird er durch die Stützen 13 und die Einspannung fixiert.

In den Fig. 5 und 6 wird die nachfolgend noch im einzelnen beschriebene Verwendung des Behälters 1 zur Lagerung von Flüssigmist mit einer Schwimmdecke wiedergegeben, bei der sich die Längskammern 3 oben befinden müssen. Fig. 5 zeigt wiederum einen Spaltenboden 12, durch den hindurch der Flüssigmist in den Behälter 1 hineinfällt. Ferner sind Abweiser 15 vorgesehen, die von den Spaltenboden 12 und den Stützen 13 getragen werden. An der Unterseite der Abweiser 15 befinden sich Längskammern 3. In Fig. 6 ist der allseits geschlossene Behälter 1 gleichfalls mit oben liegenden Längskammern 3 wiedergegeben. Durch Abspannungen 14 und außen um den Behälter herumstehenden Pendelstützen 24 wird ein Seilnetz auf der Oberseite des Behälters 1 ausgespannt.

## Die Homogenisierung von Schweinegülle

Flüssiger Schweinemist buw. Schweinegülle hat bekanntlich die Eigenschaft, bei längerem Stehen einen festen Bodensatz zu bilden. Dieses ist unerwünscht, da der Bodensatz nach einiger Zeit nur noch mechanisch entfernt werden kann.

Daher besteht, um eine vollständige Entleerung eines Flüssigmistbehälters zu erreichen, der Wunsch, die festen Bestandteile in der Flüssigkeit suspendiert zu halten, die Schweinegülle also zu homogenisieren. Diese Homogenisierung ist nun mit dem Behälter 1 nach der Erfindung möglich, indem dieser so aufgestellt wird, daß die Bodenfläche 2 mit den Längskammern 3 sich unten befinden. Diese Aufstellung wird in den Fig. 1, 3 und 4 wiedergegeben. Ist im Ruhezustand der Behälter 1 ganz oder teilweise mit Schweinegülle gefüllt, so sind die Längskammern 31 bis 36 leer und die die Längskammern bildende innere Schale 22 liegt flach auf der äußeren Schale 21 auf. Dieser Zustand ist links in Fig. 3 wiedergegeben, wo die Längskammern 34, 35 und 36 im entleerten Zustand dargestellt sind. Sind die Bögen 81 nach unten gerichtet, so kann die Pumpe 7 die Schweinegülle schon bei einem entsprechend niedrigen Flüssigkeitsstand ansaugen. Andererseits kann bei vollem Behälter 1 der Strömungskreislauf in den einzelnen Zonen über den Längskammern 31 bis 36 in seiner Richtung verändert werden. Der von der Pumpe angesaugte Flüssigkeitsanteil der Gülle wird durch die Zulaufrohre 51 bis 56 in die Längskammern 31 bis 36 gedrückt. Durch den etwas geringen Querschnitt der Austrittsöffnungen 61 bis 63 baut sich in den Kammern ein Überdruck auf, der dazu führt, daß sich die Längskammern 31 bis 36 nun mit einem halbkreisförmigen Querschnitt aufblähen. Die darüberliegende Schlammschicht oder der Bodensatz wird durch diesen Vorgang wellenförmig ausgehoben und durch die verschieden hohe Anhebung mechanisch beansprucht und grob zerstört. Durch den Strömungskreislauf im Behälter 1 werden im weiteren Verlauf die Feststoffanteile mit den Flüssigkeitsanteilen vermischt, also homogenisiert.

Durch Umschalten der Drehrichtung der Pumpe 7 und entsprechender Stellung des Mehrweghahnes kann der in den Zeichnungen nicht dargestellte Transportwagen befüllt und die Behälter 1 entleert werden. Auch während des Homogenisierungsvorganges kann durch eine Umschaltung der Drehrichtung der Pumpe 7 und somit durch eine Richtungsänderung des Strömungskreislaufes, der Homogenisierungsvorgang unterstützt und beschleunigt werden.

Bei einer einseitig offenen Ausführung des Behälters 1, wie dieser in den Fig. 4 und 5 dargestellt ist und wie dieser bei einer Aufstellung unterhalb der Lebensräume von Schweinen verwendet wird, wird die Pumpe 7 in Intervallschaltung betrieben. Einige Zeit, bevor die Gülle homogenisiert sein soll, wird die Pumpe 7 über eine entsprechend programmierte Zeitschaltuhr in kurzen Intervallen, z. B. 4 × 10 Minuten pro Tag, eingeschaltet, so daß die im Schwebezustand befindlichen Feststoffanteile sich bis zur nächsten Einschaltung nicht absetzen können. Diese Maßnahme bedeutet gegenüber der herkömmlichen Homogenisierung eine ganz bedeutende Herabsetzung der Geruchsbelästigung der Umwelt, da nicht wie bisher an einem oder zwei Tagen konzentriert gerührt wird. Bei den Lagerbehältern nach der Erfindung verteilen sich die Homogenisierungsphasen auf einen sehr viel längeren Zeitraum.

Die Homogenisierung der Rindergülle:

Der Behälter 1 ist hierfür um 180° gedreht, d. h. die bisherige Grundfläche 2 mit den Längskammern 3 befindet sich nun oben, während die Rohre 8 sich am nunmehrigen Boden des Behälters 1 befinden, so daß die Rohrbögen 81 nur noch einen Schwenkbereich von 180° haben. Bei der Lagerung von Rindergülle bildet sich eine verhältnismäßig feste Schwimmdecke. Um diese zu zerstören, werden die unten liegenden Flüssigkeitsanteile in die oben liegenden Längskammern 3 gepumpt, wodurch sich diese nach unten aufblähen und die in Fig. 6 wiedergegebene Form annehmen. Durch die Aufblähung der Längskammern 3 wird die Schwimmdecke nach unten gedrückt, durch die wellenförmige Unterseite mechanisch beansprucht und grob zerstört.

Der in Fig. 5 wiedergegebene offene Behälter 1 zur Anordnung unterhalb des Lebensraumes von Rindern unterscheidet sich von dem in Fig. 4 wiedergegebenen Behälter, der unterhalb des Lebensraumes von Schweinen angeordnet werden kann, wie folgt: Zwischen den Längskammern 3 sind offene Schlitze vorhanden, so daß Flüssigmist und Festmist durch den Spaltboden 12 über die Abweiser 15 hinweg in den Behälter 1 fallen. Diese Abweiser 15 sind einerseits mit dem Spaltboden 12 verbunden, andererseits halten sie die Längskammern 3 in der erforderlichen Stellung und verhindern das Ausweichen der Längskammern 3 beim Aufblähen nach oben.

Die Erfindung wurde zwar vorstehend unter Bezugnahme auf bestimmte Ausführungsbeispiele beschrieben jedoch können selbstverständlich durchaus noch eine Reihe von Änderungen und Abwandlungen vorgenommen werden, ohne daß hierdurch der Rahmen der Erfindung überschritten wird.

**Patentansprüche**

1. Behälter zur Lagerung von Flüssigkeiten, insbesondere von Flüssigmist, mit einer Einrichtung zur Homogenisierung von in dem Behälter (1) zu lagernden Flüssigkeiten mit sich entmischenden Feststoffanteilen, dadurch gekennzeichnet, daß der Behälter (1) die Form eines flachen Kissens hat und dessen Wandmaterial aus einem mit Kunststoff oder Gummi beschichteten Gewebe besteht und daß bei rechteckiger oder quadratischer Grundflähe (2) diese mit mindestens einer langgestreckten aufblähbaren Kammer (Längskammer) (3) und bei runder Grundfläche diese mit mindestens einer sektoralen aufblähbaren Kammer in Form eines Kreisausschnittes versehen ist.

2. Behälter nach Anspruch 1, dadurch gekennzeichnet, daß eine Grundfläche (2) des Behälters (1) unter Bildung der Längskammern (3) zweischalig ausgebildet ist, wozu die innere Schale (22) in Querrichtung gesehen, länger als die äußere Schale (21) ausgebildet ist.

3. Behälter nach Anspruch 2, dadurch gekennzeichnet, daß die längere innere Schale (22) mit der äußeren Schale (21) durch im gleichen Abstand und parallel zueinander verlaufende Querverbindungen (41—43), auf der einen Breitseite des Behälters (1) mit der Seitenwand (23) und auf der anderen Breitseite des Behälters (1) wiederum mit der äußeren Schale (21) der Grundfläche (2) verbunden ist.

4. Behälter nach Anspruch 3, dadurch gekennzeichnet, daß jede Längskammer (3) ein Zulaufrohr (5) und eine Austrittsöffnung (6) besitzt und daß das Zulaufrohr (5) über eine Pumpe (7) und einen Mehrweghahn mit mindestens einem in den Hauptteil (11) des Behälters (1) mündendes Rohr (8) verbunden ist.

5. Behälter nach Anspruch 4, dadurch gekennzeichnet, daß die Pumpe (7) über einen Injektor (9) die umzupumpende Flüssigkeit belüftet und der Hauptteil (11) des Behälters (1) eine Entlüftungsöffnung (10) aufweist.

6. Behälter nach Anspruch 1 bis 5, dadurch gekennzeichnet, daß bei oben liegenden Längskammern (3) die Kissenform des Behälters (1) durch ein ausgespanntes Seilnetz (16) erzeugt wird.

7. Behälter nach Anspruch 1 bis 6, dadurch gekennzeichnet, daß der einseitig offene Behälter (1) aus einer rechteckigen, quadratischen oder runden Bodenfläche (2) mit Seitenwände besteht und seine Form durch Stützen (13) und einer Einspannung (17) in die Konstruktion des Stallbodens (18) erhält (Fig. 4 und 5).

8. Behälter nach Anspruch 7, dadurch gekennzeichnet, daß oberhalb der offenen Behälterseite Abweiser (15) für in den Behälter (1) fallende Flüssigkeit angeordnet sind (Fig. 5).

9. Behälter nach Anspruch 8, dadurch gekennzeichnet, daß die Längskammern (3) an der Unterseite der Abweiser (15) angeordnet sind (Fig. 5).

**Claims**

1. Container for the storage of liquids, particularly of liquid dung, with an equipment for the homogenisation of liquids with segregating solid matter components to be stored in the container (1), characterised thereby, that the container (1) has the shape of a flat cushion and its wall material consists of a woven fabric coated with synthetic material or rubber and that this is provided with at least one alongate inflatable chamber (longitudinal chamber) (3) in the cass of rectangular or square base area (2) and with at least one sectorial inflatable chamber in the shape of a sector of a circle in the case of round base area.

2. Container according to claim 1, characterised thereby, that one base area (2) of the container (1) is constructed to be doubleshelled with the formation of the longitudinal chambers (3), for which the inner shell (22) seen in transverse direction is constructed to be longer than the outer shell (21).

3. Container according to claim 2, characterised thereby, that the longer inner shell (22) is connected with the outer shell (21) through transverse connections (41 to 43) extending at equal spacing and parallelly one to the other, with the side wall (23) on the one wide side of the container (1) and again with the outer shell (21) of the base area (2) on the other wide side of the container (1).

4. Container according to claim 3, characterised thereby, that each longitudinal chamber (3) possesses an inlet pipe (5) and an exit opening (6) and that the inlet pipe (5) is connected through a pump (7) and a multi-way cock with at least one pipe (8) opening out into the main part (11) of the container (1).

5. Container according to claim 4, characterised thereby, that the pump (7) through an injector (9) aerates the liquid to be pumped round and the main part (11) of the container (1) displays a ventilation opening (10).

6. Container according to claim 1 to 5, characterised thereby, that the cushion shape of the container (1) is produced through a stretched-out rope mesh (16) in the case of the longitudinal chambers (3) lying at the top.

7. Container according to claim 1 to 6, characterised thereby, that the one-sidedly open container (1) consists of a rectangular, square or round bottom area (2) with side walls and obtains its shape through stays (13) and a clamping (17) into the construction of the stable bottom (18) (Figures 4 and 5).

8. Container according to claim 7, characterised thereby, that deflectors (15) for liquid dropping into the container (1) are arranged above the open container side (Figure 5).

9. Container according to claim 8, characterised thereby, that the longitudinal chambers (3) are arranged at the underside of the deflectors (15) (Figure 5).

**Revendications**

1. Réservoir pour l'emmagasinage de liquides, en particulier de purin, comprenant un dispositif pour l'homogénéisation de liquides, contenant des parties solides qui se sédimentent, à emmagasiner dans le réservoir (1), caractérisé en ce que le réservoir (1) a la forme d'un coussin plat dont la paroi est formée d'un tissu enduit de matière plastique ou de caotchouc et que, lorsque la surface de base (2) est rectangulaire ou carrée, elle est munie d'au moins une chambre (3) gonflable disposée longitudinalement (chambre longitudinale) et que, lorsque la surface de base est ronde, elle est munie d'au moins une chambre gonflable disposée selon un secteur de cercle.

2. Réservoir selon la revendication 1, caractérisé en ce que pour constituer les chambres longitudinales (3), une surface de base (2) du réservoir (1) est formée de deux couches, la couche intérieure (22) étant, vue en direction transversale, plus longue que la couche extérieure (21).

3. Réservoir selon la revendication 2, caractérisé en ce que la couche intérieure plus longue (22) est reliée à la couche extérieure (21) par des jonctions transversales (41—43) s'étendant à égale distance et parallèlement les unes aux autres, à la paroi latérale (23) sur l'un des grands côtés du réservoir (1), et également à la couche extérieure (21) de la surface de base (2) sur l'autre grand côté du réservoir (1).

4. Réservoir selon la revendication 3, caractérisé en ce que chaque chambre longitudinale (3) possède un tuyau d'arrivée (5) et une ouverture de sortie (6) et que le tuyau d'arrivée (5) est relié par l'intermédiaire d'une pompe (7) et d'un robinet à plusieurs voies à au moins un tuyau (8) débouchant dans la partie principale (11) du réservoir (1).

5. Réservoir selon la revendication 4, caractérisé en ce que la pompe (7) aère le liquide à transvaser par un injecteur (9) et que la partie principale (11) du réservoir (1) présente une ouverture de dégazage (10).

6. Réservoir selon l'une des revendications 1 à 5, caractérisé en ce que les chambres longitudinales (3) étant situées en haut, la forme en coussin du réservoir (1) est produite au moyen d'un filet de corde (16) déployé.

7. Réservoir selon l'une des revendications 1 à 6, caractérisé en ce que le réservoir (1) ouvert d'un côté est formé d'une surface de base (2) rectangulaire, carrée ou ronde, munie de parois latérales et que sa forme lui est conférée par des appuis (13) et un encastrement (17) dans la structure du sol (18) de l'étable (figures 4 et 5).

8. Réservoir selon la revendication 7, caractérisé en ce qu'au-dessus du côté ouvert du réservoir sont disposés des déflecteurs (15) pour le liquide tombant dans le réservoir (1) (figure 5).

9. Réservoir selon la revendication 8, caractérisé en ce que les chambres longitudinales (3) sont disposées du côté inférieur des déflecteurs (15) (figure 5).

Fig. 1

Fig. 2

0 020 802

Fig. 3

Fig. 4

Fig. 5

Fig. 6